# EUROPEAN PATENT APPLICATION

(11) **EP 2 642 712 A1**
(43) Date of publication of application: **25.09.2013**
(21) Application number: 12186240.3
(22) Date of filing: 27.09.2012
(51) Int. Cl.: H04L 29/06

(54) **Single authentication context for network and application access**

(30) Priority: 19.03.2012 US 201261612966 P; 30.08.2012 US 201213599915
(71) Applicant: Avaya Inc., Basking Ridge, NJ 07920 (US)
(72) Inventor: Menon, Sunil, Basking Ridge, NJ 07920 (US); Terpstra, Marten, Basking Ridge, NJ 07920 (US); Palaparthi, Ravi, Basking Ridge, NJ 07920 (US); Patel, Shailesh, Basking Ridge, NJ 07920 (US); Jain, Chetan, San Jose, California (US)
(74) Representative: Williams, David John

(57) **Abstract**

Methods, systems, and computer readable media for a single authentication context for network and application access are described. An embodiment can include a method for using a single authentication context for network and application access. The method can include generating, using one or more processors, an authentication context. The method can also include providing, using the one or more processors, the authentication context to one or more application programs. The method can further include determining an application access level for each of the one or more applications based on the authentication context.

## Description

### RELATED APPLICATIONS

This application claims the benefit of U.S. Provisional Application No. 61/612,966, entitled "Single Sign-On Authentication System for Network and Application Access", filed on March 19, 2012, which is incorporated herein by reference in its entirety.

### FIELD

Embodiments relate generally to network authentication, and more particularly, to methods, systems and computer readable media for a single authentication context for network and application access.

### BACKGROUND

User authentication may be done separately at a network level and at an application specific level. Moreover, different authentication handles /mechanisms may used to authenticate/validate a user. Multiple authentication levels may waste resources and contribute to a negative user experience.

For example, a user may authenticate at a network level to access a network from an endpoint, such as an iPad. Next, the user may want to use a voice application such as Avaya Flare Communicator and will be prompted for authentication at the application stage.

Some application authentication systems may ignore the fact that the user has logged into the network with valid credentials. Further, some application authentication systems may ignore how the user is accessing the network. In these conventional systems, network and application security may be handled as two different ecosystems of access even though the user is the same.

### SUMMARY

One or more embodiments can include a method for using a single authentication context for network and application access. The method can include generating, using one or more processors, an authentication context. The method can also include providing, using the one or more processors, the authentication context to one or more application programs. The method can further include determining an application access level for each of the one or more applications based on the authentication context.

The method can also include receiving, at the one or more processors, an authentication request, and requesting authentication credentials in response to the authentication request. The method can further include authenticating, using the one or more processors, the authentication credentials. The authentication context can include one or more of mode of access, location of access and device type.

The method can further include granting access to a network based on the authenticating. The authentication context includes one or more of a location of a device, a mode of access, an SSID, a user identity, a MAC address, an IP address, and device type. The method can also include restricting access to a network based on the authenticating. The method can also include denying access to a network based on the authenticating.

One or more embodiments can include a system having a processor coupled to a nontransitory computer readable medium. The nontransitory computer readable medium can have software instructions stored thereon that, when executed by the processor, cause the processor to perform a series of operations. The operations can include generating an authentication context.

The operations can also include providing the authentication context to one or more application programs. The operations can further include determining an application access level for each of the one or more applications based on the authentication context.

The operations can also include receiving an authentication request, and requesting authentication credentials in response to the authentication request. The operations can further comprise authenticating the authentication credentials. The authentication context can include one or more of a mode of access, a location of access and a device type. The mode of access includes one of wired or wireless access. The operations can include granting access to a network based on the authenticating.

One or more embodiments can include a nontransitory computer readable medium having stored thereon software instructions that, when executed by a processor, cause the processor to perform a series of operations. The operations can include generating an authentication context. The operations can also include providing the authentication context to one or more application programs. The operations can further include determining an application access level for each of the one or more applications based on the authentication context.

The operations can further comprise receiving an authentication request, and requesting authentication credentials in response to the authentication request. The operations can also comprise authenticating the authentication credentials. The authentication context includes one or more of a location of a device, a mode of access, an SSID, a user identity, a MAC address, an IP address and device type. The mode of access can include one of wired or wireless access. The operations can further comprise granting access to a network based on the authenticating.

The operations can further comprise authorizing access to one or more networks and/or applications based on the user authentication. The authentication context can include one or more of a location of a device, a mode of access, an SSID, a user identity, a MAC address, an IP address and device type. The mode of access can include one of wired or wireless access.

### BRIEF DESCRIPTION OF THE DRAWINGS

FIG. 1 is a diagram of an example network in accordance with at least one embodiment.

FIG. 2 is a flow chart showing an example method for single authentication context for network and application access in accordance with at least one embodiment.

### DETAILED DESCRIPTION

In general, an embodiment can include a method, system or computer readable medium for a single authentication context for network and application access. The authentication context can include a location of a device, a mode of access, an SSID, a user identity, a current load on one or more authentication servers, a MAC address, an IP address, health and security information, a device type and/or the like.

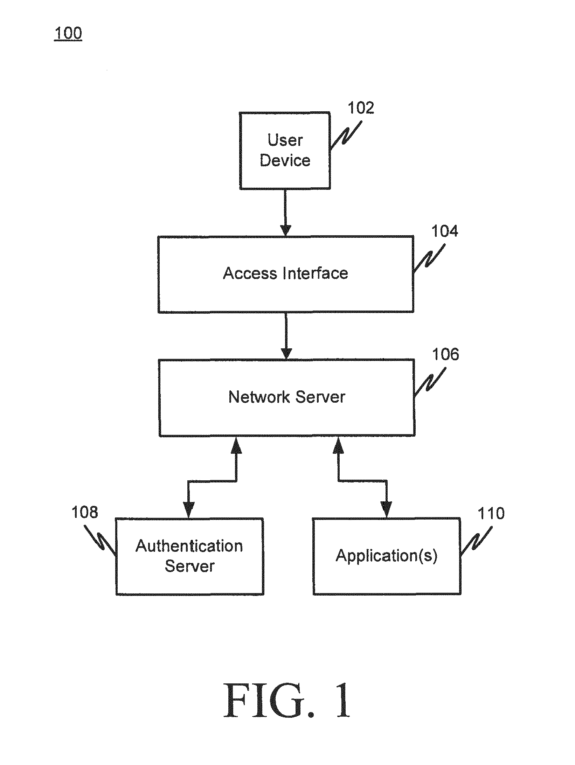

As shown in FIG. 1, a network 100 includes a user device 102, an access interface 104, a network server 106, an authentication server 108 and one or more application programs 110.

The user device 102 can send an authentication request to the network server 106 via the access interface 104. The access interface 104 can include a wired and/or wireless network access interface.

The network server 106 can forward the authentication request to one of plurality of authentication servers or authentication services such as LDAP, Kerberos, Microsoft Active Directory, multi-factor authentication or the like. The authentication servers can include an Avaya Identity Engine Ignition Server, for example.

The authentication requests can be in one of a plurality of authentication protocols such as RADIUS, terminal access controller access-control system (TACACS+), password authentication protocol (PAP), challenge handshake authentication protocol (CHAP), TTLS-PAP, MS-CHAPv2, or an extensible authentication protocol (EAP) protocol such as protected extensible authentication protocol (PEAP), EAP-MDS, EAP-MSCHAPv2, PEAP/EAP-MSCHAPv2, EAP-TLS, PEAP/EAP-TLS, EAP-GTC. The authentication protocol can also include MAC address authentication, Windows machine authentication and RSA SecurID or the like.

In addition to the authentication stores mentioned above, the user stores can also include RADIUS Server, Ignition Server's embedded user store and/or RSA Authentication Manager.

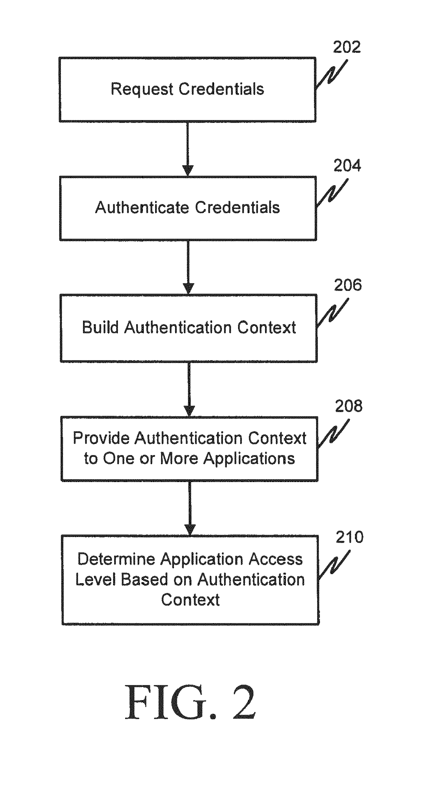

In operation, the network server 106 can send an authentication request to an authentication server 108. Once a user is authenticated, the network server 106 can build an authentication context and provide the authentication context to one or more applications 110 (e.g., using a method similar that described below in connection with FIG. 2).

FIG. 2 is a flow chart showing an example method for dynamic routing of authentication requests. Processing begins at 202, where credentials are requested. Processing continues to 204.

At 204, the system can authenticate the credentials using a method similar to that described above regarding FIG. 1. Processing continues to 206.

At 206, an authentication context is created using one or more of the items of information learned from the request. The items of information can include, but are not limited to, a location of a device, a mode of access, an SSID, a user identity, a MAC address, an IP address, health and security information, a device type and/or the like. Processing continues to 208.

At 208, the authentication context is provided to one or more applications. Processing continues to 210.

At 210, each application determines an access level based on the authentication context.

The authentication context system provides the security needed to grant a user access to a particular application without having the burden of separately entering authentication credentials.

The authentication context can permit applications to provide selective levels of access to application functionality and enterprise data. Access can be limited based on any context elements. For example, if a context identified a user as using a personal iPhone, a corporate email application could grant full access, while another application, such as SAP, may deny or limit access based on a predefined security level. In another example, if the authentication context identified the user as using a corporate device, but accessing from a public place such as Starbucks, then a Payroll application may deny or restrict access to the user.

It will be appreciated that the modules, processes, systems, and sections described above can be implemented in hardware, hardware programmed by software, software instructions stored on a nontransitory computer readable medium or a combination of the above. A system for edge network virtualization encapsulation, for example, can include a processor configured to execute a sequence of programmed instructions stored on a nontransitory computer readable medium. For example, the processor can include, but not be limited to, a personal computer or workstation or other such computing system that includes a processor, microprocessor, microcontroller device, or is comprised of control logic including integrated circuits such as an Application Specific Integrated Circuit (ASIC). The instructions can be compiled from source code instructions provided in accordance with a programming language such as Java, C, C++, C#.net, assembly or the like. The instructions can also comprise code and data objects provided in accordance with, for example, the Visual Basic™ language, or another structured or object-oriented programming language. The sequence of programmed instructions, or programmable logic device configuration software, and data associated therewith can be stored in a nontransitory computer-readable medium such as a computer memory or storage device which may be any suitable memory apparatus, such as, but not limited to ROM, PROM, EEPROM, RAM, flash memory, disk drive and the like.

Furthermore, the modules, processes systems, and sections can be implemented as a single processor or as a distributed processor. Further, it should be appreciated that the steps mentioned above may be performed on a single or distributed processor (single and/or multicore, or cloud computing system). Also, the processes, system components, modules, and sub-modules described in the various figures of and for embodiments above may be distributed across multiple computers or systems or may be co-located in a single processor or system. Example structural embodiment alternatives suitable for implementing the modules, sections, systems, means, or processes described herein are provided below.

The modules, processors or systems described above can be implemented as a programmed general purpose computer, an electronic device programmed with microcode, a hard-wired analog logic circuit, software stored on a computer-readable medium or signal, an optical computing device, a networked system of electronic and/or optical devices, a special purpose computing device, an integrated circuit device, a semiconductor chip, and/or a software module or object stored on a computer-readable medium or signal.

Embodiments of the method and system (or their sub-components or modules), may be implemented on a general-purpose computer, a special-purpose computer, a programmed microprocessor or microcontroller and peripheral integrated circuit element, an ASIC or other integrated circuit, a digital signal processor, a hardwired electronic or logic circuit such as a discrete element circuit, a programmed logic circuit such as a PLD, PLA, FPGA, PAL, or the like. In general, any processor capable of implementing the functions or steps described herein can be used to implement embodiments of the method, system, or a computer program product (software program stored on a nontransitory computer readable medium).

Furthermore, embodiments of the disclosed method, system, and computer program product (or software instructions stored on a nontransitory computer readable medium) may be readily implemented, fully or partially, in software using, for example, object or object-oriented software development environments that provide portable source code that can be used on a variety of computer platforms. Alternatively, embodiments of the disclosed method, system, and computer program product can be implemented partially or fully in hardware using, for example, standard logic circuits or a VLSI design. Other hardware or software can be used to implement embodiments depending on the speed and/or efficiency requirements of the systems, the particular function, and/or particular software or hardware system, microprocessor, or microcomputer being utilized. Embodiments of the method, system, and computer program product can be implemented in hardware and/or software using any known or later developed systems or structures, devices and/or software by those of ordinary skill in the applicable art from the function description provided herein and with a general basic knowledge of the software engineering and computer networking arts.

Moreover, embodiments of the disclosed method, system, and computer readable media (or computer program product) can be implemented in software executed on a programmed general purpose computer, a special purpose computer, a microprocessor, or the like.

It is, therefore, apparent that there is provided, in accordance with the various embodiments disclosed herein, systems, methods and computer readable media for a single authentication context for network and application access.

While the disclosed subject matter has been described in conjunction with a number of embodiments, it is evident that many alternatives, modifications and variations would be, or are, apparent to those of ordinary skill in the applicable arts. Accordingly, Applicants intend to embrace all such alternatives, modifications, equivalents and variations that are within the spirit and scope of the disclosed subject matter.

## Claims

1. A method for using a single authentication context for network and application access, the method comprising:
generating, using one or more processors, an authentication context;
providing, using the one or more processors, the authentication context to one or more application programs; and
determining, using the one or more processors, an application access level for each of the one or more application programs based on the authentication context.

2. The method of claim 1, further comprising:
receiving, at the one or more processors, an authentication request; and
requesting, using the one or more processors, authentication credentials in response to the authentication request.

3. The method of claim 2, further comprising authenticating, using the one or more processors, the authentication credentials.

4. The method of claim 3, wherein the authentication context includes one or more of mode of access, location of access and device type.

5. The method of claim 4, further comprising granting access to a network based on the authenticating.

6. The method of claim 1, wherein the authentication context includes one or more of a location of a device, a mode of access, an SSID, a user identity, a MAC address, an IP address, and device type.

7. The method of claim 4, further comprising restricting access to a network based on the authenticating.

8. The method of claim 4, further comprising denying access to a network based on the authenticating.

9. A system comprising:
a processor coupled to a nontransitory computer readable medium having stored thereon software instructions that, when executed by the processor, cause the processor to perform a series of operations including:
generating an authentication context;
providing the authentication context to one or more application programs; and
determining an application access level for each of the one or more application programs based on the authentication context.

10. The system of claim 9, wherein the operations further include:
receiving an authentication request; and
requesting authentication credentials in response to the authentication request.

11. The system of claim 10, wherein the operations further include authenticating the authentication credentials.

12. The system of claim 11, wherein the authentication context includes one or more of a mode of access, a location of access and a device type.

13. The system of claim 12, wherein the mode of access includes one of wired or wireless access.

14. The system of claim 12, further comprising granting access to a network based on the authenticating.

15. A nontransitory computer readable medium having stored thereon software instructions that, when executed by a processor, cause the processor to perform a series of operations comprising:
generating an authentication context;
providing the authentication context to one or more application programs; and
determining an application access level for each of the one or more application programs based on the authentication context.
